# FASCICULE DE BREVET EUROPEEN

(11) **EP 0 511 088 B1**
(45) Date de publication et mention de la délivrance du brevet: **28.08.1996**
(21) Numéro de dépôt: 92401130.7
(22) Date de dépôt: 22.04.1992
(51) Int. Cl.: F16C 1/22

(54) **Dispositif de réglage automatique de la longueur d'un câble dans des mécanismes de commande à distance**
Vorrichtung zur automatischen Längenverstellung eines Bowdenzuges
Automatic length adjusting device of a Bowden cable

(30) Priorité: 26.04.1991 ES 9101056; 31.03.1992 ES 9200679
(43) Date de publication de la demande: 28.10.1992
(73) Titulaire: Daumal Castellon, Melchor, E-08013 Barcelone (ES)
(72) Inventeur: Daumal Castellon, Melchor, E-08013 Barcelone (ES)
(74) Mandataire: Levy, David

(56) Documents cités:
- FR-A- 2 109 966
- GB-A- 200 159
- GB-A- 2 210 946
- US-A- 4 378 713

## Description

Ainsi que le titre l'indique, la présente invention concerne un dispositif de réglage automatique de la longueur du câble dans des mécanismes de commande à distance.

D'une manière plus précise, le dispositif de réglage qui fait l'objet de la présente invention a été plus particulièrement mis au point en vue de son application aux mécanismes au moyen desquels se règle, à partir de la pédale de l'accélérateur, la position adoptée à chaque instant par le papillon qui contrôle le débit du mélange gazeux envoyé aux cylindres dans les véhicules automobiles. Cela ne veut nullement dire que le dispositif de réglage considéré ne puisse pas admettre aussi de nombreuses autres applications, ces dernières devant aussi être considérées comme comprises dans le domaine de l'invention, ce dispositif pouvant en réalité être avantageusement accouplé à n'importe quel mécanisme de commande à distance par câble flexible.

Comme on le sait bien, les mécanismes de réglage de l'accélérateur dans les véhicules automobiles comprennent, d'une manière générale, un câble flexible qui se déplace à l'intérieur d'une gaine correspondante et qui, par une extrémité, se trouve relié à la pédale de l'accélérateur et, par l'extrémité opposée, à un levier accouplé directement ou indirectement au papillon dont il s'agit de régler la position. Ainsi qu'on le sait bien aussi, dans la majorité de ces mécanismes de commande à distance, il est prévu un dispositif qui permet une certaine variation de la longueur utile de la gaine, en opposition à une force élastique, quand la tension du câble excède une certaine limite préétablie. La fonction de ce dispositif consiste à permettre un certain jeu de montage, en évitant des phénomènes de fatigue du câble lui-même et/ou des éléments réglés, dans le cas où la position limite de la pédale et la position d'ouverture maximale du papillon ne coïncident pas exactement, c'est-à-dire quand il existe la possibilité que l'action du conducteur sur cette pédale puisse se poursuivre alors que le papillon aurait déjà atteint la position d'ouverture maximale, laquelle correspond à l'accélération maximale.

On sait également que, dans les mécanismes de commande à distance que l'invention conceme, il est intéressant que, dans la position de repos du mécanisme, la pédale de réglage se trouve située à une hauteur déterminée, établie avec le maximun de précision. Et cela autant pour des raisons de commodité du conducteur du véhicule que, ainsi qu'indiqué ci-dessus, pour que la position limite opposée de cette pédale soit la plus proche possible de la position limite d'ouverture maximale du papillon réglé, ce qui réduit à un minimum l'action du dispositif élastique d'absorption des efforts auquel on s'est précédemment référé. A cet effet, les mécanismes de commande à distance en question doivent toujours faire l'objet d'un réglage, au cours d'une phase finale du processus de fabrication du véhicule, par laquelle la pédale est déjà située dans une position angulaire la plus voisine possible de la position limite idéale de repos préétablie. Cette opération s'effectue manuellement et consiste en définitive à régler la longueur de la gaine afin de conférer au câble le degré nécessaire de tension. A cet effet, dans la solution la plus généralement adoptée, la gaine présente, à l'une de ses extrémités, par l'intermédiaire de laquelle s'effectue son ancrage en un point fixe de la structure du véhicule, une succession de rainures ou nervures périphériques dans l'une quelconque desquelles peut s'emboîter une pince ou élément analogue de fixation, ce qui règle ainsi la longueur utile de l'ensemble. On comprend que cette opération manuelle, qui doit être effectuée par des ouvriers doués d'un certain niveau de spécialisation, oblige à engager une dépense qui n'est nullement négligeable, et on comprend aussi que, comme toute opération de ce type, elle entraîne un pourcentage de risque d'erreurs, d'imprécisions, ou de distractions qui peuvent avoir des conséquences importantes.

Pour remédier aux inconvénients précités, il a déjà été proposé des solutions visant à obtenir que le réglage considéré s'effectue automatiquement lorsqu'est exécuté le premier actionnement sur la pédale de l'accélérateur. Ces solutions connues s'écartent toutefois très peu du système manuel de réglage, du fait qu'elles se limitent à conserver les rainures périphériques à l'extrémité de la gaine, à laquelle on s'est déjà référée, et à établir, entre ces rainures et le support ou élément de fixation sur le châssis du véhicule, une force élastique de retenue qui permet un certain glissement de l'extrémité considérée vis-à-vis de cet élément lorsque la tension du câble devient supérieure à une limite déterminée. Ces solutions ne présentent aucun avantage en comparaison du système classique de réglage manuel, mais elles souffrent en outre de défauts importants dont le principal réside dans la faible sécurité de fixation de la gaine, plus précisément du fait de la nécessité de garantir ses possibilités de glissement, avec le danger qu'il se produise de graves défauts de fonctionnement du système.

Le document FR-A-2 109 966 fait connaître un dispositif de réglage du type mentionné dans le préambule de la revendication 1. Les éléments d'encliquetage sont réalisés non dans le câble lui-même, mais entre celui-ci et son embout, et aucun système élastique d'absorption n'est alors possible à ce niveau.

La présente invention a plus précisément pour objet un dispositif qui permette de vaincre, d'une forme pratiquement définitive, les inconvénients qui ont été schématiquement exposés, en fournissant un réglage qui s'effectue d'une manière totalement automatique lorsque se produit le premier actionnement sur la pédale de l'accélérateur en garantissant un fonctionnement précis et sûr du mécanisme de commande lors de tous les actionnement successifs, tout en conservant la possibilité d'avoir un système élastique d'absorption de surtensions, et dont la réalisation forme un bloc compact qui accroît dans une mesure très modeste le coût total du mécanisme de commande à distance et ne complique absolument pas le procédé de montage de ce mécanisme dans le véhicule correspondant.

L'invention atteint son but grâce aux caractéristiques énoncées dans la revendication 1.

Par ailleurs, le contenu essentiel, le schéma de fonctionnement et les principaux avantages et caractéristiques du dispositif automatique de réglage qui fait l'objet de l'invention deviendront plus facilement compréhensibles au vu des dessins annexés auxquels l'exposé se réfère ci-après et dans lesquels, sous une forme schématique et bien entendu sans caractère limitatif d'aucun genre, il est représenté des exemples concrets de réalisation pratique de ce dispositif.

Sur ces dessins:
la figure 1 est un schéma général représentant un dispositif de commande du papillon de l'accélérateur d'un véhicule, dont fait partie le système automatique de réglage qui constitue l'objet de l'invention,
la figure 2 est une coupe longitudinale schématique, à plus grande échelle, du dispositif automatique de réglage considéré et finalement
la figure 3 est une coupe longitudinale analogue à celle représentée à la figure précédente, se rapportant à une variante de réalisation qui s'avère particulièrement avantageuse.

Le mécanisme de commande à distance auquel l'invention s'applique le mieux comprend, ainsi qu'il est normal, un câble flexible 1 qui se déplace en étant guidé par une gaine 2 et qui se trouve fixé, par l'une de ses extrémités, à la pédale de l'accélérateur 3, laquelle agit à la façon d'un levier en tournant sur un axe fixe 4, et, par son extrémité opposée, au levier 5 qui détermine les mouvements du papillon 6. Pour sa part, la gaine 2 se trouve fixée par ses extrémités 7 et 7' et par l'intermédiaire d'un système classique quelconque à des points ou supports fixes 8 et 8′ correspondants qui sont solidaires de la structure du véhicule.

Ainsi que cela est déjà connu en soi, la gaine 2 se trouve divisée en deux tronçons 2a et 2b solidaires d'éléments télescopiques 9 et 10 capables de glisser l'un par rapport à l'autre et sollicités constamment de façon à adopter une position limite d'extension maximale (déterminée par un jeu de butées non représenté, tel qu'un simple couvercle fixé à l'élément extérieur 9), sous l'action d'un ressort 11. Cette capacité de variation de la longueur utile de la gaine permet d'absorber les efforts auxquels on s'est déjà précédemment référé, en supposant que la position limite d'accélération maximale de la pédale 3 ne coïncide pas avec la position limite d'ouverture maximale du papillon, c'est-à-dire en supposant quel le conducteur du véhicule peut continuer de déplacer la pédale alors que le papillon a déjà atteint ladite position d'ouverture maximale.

Conformément à l'invention, le câble flexible 1 se trouve aussi divisé en deux tronçons 1a et 1b dont les extrémités sont rendues solidaires respectivement d'un élément femelle 12 et d'un élément mâle 13 qui s'emboîtent l'un à l'intérieur de l'autre et qui sont reliés entre eux au moyen d'un système de dents inclinées 14, ou d'un autre type équivalent de saillies complémentaires, qui permettent leur déplacement relatif dans un sens, sous un effort d'une importance préétablie, et l'empêchent dans l'autre, en permettant ainsi d'une manière concrète l'allongement du câble, mais nullement son raccourcissement. Ces deux éléments pourraient adopter de multiples formes distinctes, mais, de la manière la plus préférentielle, l'élément femelle 12 prend la forme d'un cylindre creux qui est fermé par une base 15 à laquelle se fixe l'extrémité du tronçon de câble la, qui est éventuellement doté d'ouvertures longitudinales qui lui confèrent une certaine possibilité de déformation élastique et qui, sur sa surface intérieure, est pourvu de la succession de dents 14, à section en forme de rampe, qui peuvent éventuellement se trouver constituées par un filet hélicoïdal. Pour sa part, et dans cette même forme préférée de réalisation, l'élément mâle 13 prend la forme d'un disque, par exemple métallique, auquel se fixe l'extrémité du tronçon de câble 1b et qui s'emboîte, à la façon d'un piston, à l'intérieur du corps 12 et présente, sur sa périphérie, des dents qui s'emboîtent dans les autres dents 14, ce qui détermine la solidarisation entre les deux corps dans un sens, mais permet un certain glissement relatif dans le sens opposé.

Dans une forme préférée de réalisation et suivant une autre caractéristique de l'invention, l'ensemble des deux éléments 12 et 13 qui règlent la longueur utile du câble se trouve logé, à la façon d'un piston, à l'intérieur de l'élément 10 faisant partie du dispositif de réglage de la longueur utile de la gaine le long de laquelle ce câble peut glisser librement. A cet effet, cet élément 10 se trouve constitué d'un corps moulé, de forme cylindrique, qui est fermé par une base 16 traversée librement par le câble 1b et qui présente à l'opposé une ouverture dans laquelle se fixe rigidement un couvercle 17 qui est par exemple fixé par simple emboîtement à force et sur lequel, à son tour, se trouve fixée l'extrémité du tronçon de gaine 2b.

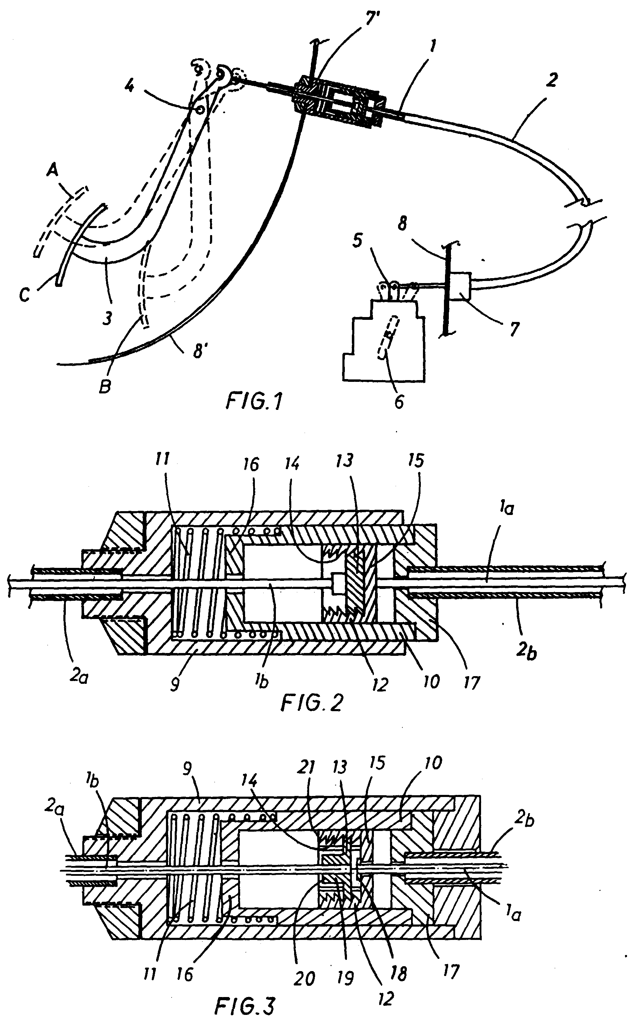

Le fonctionnement du dispositif qui vient d'être décrit devient évident uniquement en analysant le schéma représenté à la figure 1 des dessins auxquels se réfère l'exposé. Le montage de tout le mécanisme de commande à distance sur le véhicule correspondant doit s'effectuer dans la position correspondant à la longueur minimale du câble 1, c'est-à-dire avec les pièces 12 et 13 introduites au maximum l'une à l'intérieur de l'autre. Dans ces conditions, dans la position de repos, la pédale adopte la position à hauteur maximale A représentée en trait interrompu à la figure 1. A partir de cette position, lorsque le premier actionnement se produit sur cette pédale, en appuyant à fond jusqu'à la position limite opposée B, représentée aussi en trait interrompu, il se produit, dans une première phase, une rotation du levier 5, le papillon 6 passant de la position limite de fermeture à la position limite d'ouverture maximale et les éléments 12 et 13 se déplaçant conjointement le long du corps 10, tandis que, dans une seconde phase, il se produit un déplacement de ce corps 10 vis-à-vis du corps 9, le ressort 11 se comprimant, ce qui se traduit par une diminution de la longueur utile de la gaine, ce qui équivaut évidemment à une augmentation de longueur du câble. Finalement, dans une troisième phase du cycle d'actionnement sur la pédale, il se produit un déplacement de l'élément mâle 13 vis-à-vis de l'élément femelle 12, ce qui provoque l'augmentation de longueur du câble. A partir de ce premier actionnement et une fois que la longueur exacte nécessaire est déjà atteinte par le câble (au moyen du déplacement relatif des pièces 12 et 13) quand l'ensemble se trouve abandonné à lui-même, la pédale 11 se trouve située dans la position intermédiaire C, représentée en trait continu à la figure, qui constitue la position idéale prédéterminée, le dispositif se trouvant en état de fonctionner normalement, sans aucun nouveau réglage, dans tous les cycles restant d'actionnement.

A la figure 3 des dessins, il est représenté une variante de réalisation par rapport à l'exemple représenté à la figure 2 à laquelle l'exposé s'est référé jusqu'à présent. Sur cette figure 3, hormis quelques détails sans importance comme l'extrémité 18 par l'intermédiaire de laquelle s'effectue la fixation du câble la sur la base 15 de l'élément femelle 12, ou le couvercle extrême (non désigné par un repère spécial) qui limite les possibilités de glissement du corps intérieur 10 vis-à-vis du corps extérieur 9 du système télescopique, ou encore les ouvertures longitudinales (non représentées non plus par un repère spécial) qui augmentent les possibilités de déformation élastique de l'élément femelle 12, il est représenté une modification dont résultent des avantages nets et importants. Suivant cette modification, quelle que soit la forme concrète que l'élément mâle 13 présente dans chaque cas, il comporte une base 20 qui, dans la position initiale prise par les deux éléments, l'un de ceux-ci étant introduit à fond dans l'autre, doit se trouver située à proximité de l'extrémité ouverte 21 de l'élément femelle, en devant en tout cas faire saillie par rapport à cette extrémité ouverte une fois le réglage effectué, c'est-à-dire une fois que s'est produit le glissement relatif entre les deux éléments, aussi minime que soit ce déplacement. Il s'agit en définitive que, éventuellement avant, mais toujours après que le réglage ait été effectué, l'élément mâle 13 fasse saillie par rapport au plan de l'extrémité ouverte 21 de l'élément femelle 12.

Dans une forme préférée et particulièrement avantageuse de réalisation, l'élément mâle 13 présente, aux fins indiquées, un prolongement axial 19 qui constitue la partie dont l'extrémité du câble 1b est rendue solidaire par serrage et dont la base libre respecte la condition essentielle indiquée, en se trouvant située au voisinage du plan de l'extrémité ouverte 21 de l'élément femelle dans la position limite initiale et en faisant toujours saillie par rapport à ce plan une fois le déplacement relatif effectué. On peut cependant obtenir cette condition par l'intermédiaire de nombreuses autres dispositions. C'est ainsi par exemple que le disque 13 pourrait présenter trois pattes ou plus, en saillie et parallèles à l'axe, dont les extrémités définissent la base 20 ; ce disque pourrait être remplacé par un corps cylindrique dont la base 20 remplirait la condition indiquée, etc., etc.. Dans cette dernière hypothèse, on pourrait en outre intervertir les extrémités de l'accouplement entre les éléments mâles et femelles, en disposant dans la surface extérieure du premier une succession de dents périphériques et, dans la surface intérieure du second, une seule dent ou un nombre limité de dents.

En permettant que l'action de butée de l'ensemble mâle-femelle sur la base 16 de l'élément télescopique intérieur 10 soit exercée par l'élément mâle 13 et non par l'élément femelle 12, la disposition décrite fait qu'il n'apparaît pas maintenant nécessaire que la force du ressort 11 soit toujours inférieure à la force de retenue exercée par les dents 14, le dispositif se trouvant en état de fonctionner parfaitement aussi bien lorsque la première force indiquée est inférieure à la seconde que lorsqu'elle lui est supérieure. En outre, cette disposition facilite la montage du dispositif automatique de réglage dans des mécanismes de commande à distance qui sont dépourvus de dispositif d'absorption des surtensions et elle facilite le fonctionnement correct de ce dispositif de réglage aussi bien dans l'hypothèse dans laquelle la pédale d'actionnement du mécanisme de commande à distance dispose d'une butée mécanique qui limite la position d'accélération maximale que dans le cas où cette butée n'existe pas, ce qui facilite aussi le montage du dispositif en un point quelconque pouvant s'avérer intéressant et, en particulier, aussi bien d'un côté que de l'autre de la cloison qui sépare le compartiment ou partie du véhicule destiné aux occupants, dans lequel la pédale se trouve située, de l'espace occupé par le moteur.

## Revendications

1. Dispositif de réglage automatique de la longueur du câble dans des mécanismes de commande à distance, notamment pour le réglage automatique de la longueur du câble (1) de commande du papillon (6) de l'accélérateur des véhicules automobiles, du type qui comprend deux éléments (12, 13) qui s'engagent l'un dans l'autre et qui sont reliés entre eux par l'intermédiaire d'un système de dents (13a, 14) inclinées complémentaires qui, sous un effort d'une importance supérieure à une limite préétablie, permettent le déplacement de l'un desdits éléments dans un sens vis-à-vis de l'autre de manière que le mouvement relatif indiqué se traduise par une augmentation de la longueur utile du câble, caractérisé en ce que le câble est divisé en deux tronçons (1a, 1b) dont l'extrémité est fixée respectivement à l'un desdits éléments (12, 13), en ce que l'ensemble formé par lesdits deux éléments (12, 13) s'emboîte à l'intérieur d'une enveloppe (10) intercalée dans une gaine (2) le long de laquelle le câble se déplace et en ce que, convenablement guidé, il se trouve en état de glisser le long de cette enveloppe, et en ce que l'enveloppe (10) constitue la pièce intérieure d'un système télescopique (9, 10) qui est sollicité élastiquement de façon à prendre une position limite d'étendue maximale et auquel se trouvent fixées les extrémités des deux tronçons (2a, 2b) en lesquels est divisée la gaine (2).

2. Dispositif suivant la revendication 1, caractérisé en ce que l'élément mâle (13) du système des deux éléments qui s'emboîtent l'un dans l'autre et peuvent glisser dans un seul sens l'un vis-à-vis de l'autre, en opposition à la force de retenue exercée par un jeu de saillies complémentaires, présente une base d'appui (20) située dans un plan parallèle au plan de l'extrémité ouverte (21) de l'élément femelle et voisin de ce plan, en faisant saillie par rapport à celui-ci au moins une fois le réglage effectué, aussi réduit que soit le déplacement relatif qui se produit entre ces deux éléments à la suite de ce réglage.

## Patentansprüche

1. Vorrichtung zum automatischen Einstellen der Länge des Kabels in Fernsteuermechanismen, insbesondere zur automatischen Einstellung der Länge des Kabels (1) zur Steuerung der Drosselklappe (6) der Beschleunigungseinrichtung von Kraftfahrzeugen, von dem Typ, der zwei Elemente (12, 13) umfaßt, die ineinandergesteckt sind und die miteinander über ein System von ergänzenden schrägen Zähnen (13a, 14) verbunden sind, die unter einer Kraft, die größer als eine vorfestgelegte Grenze ist, die Bewegung des einen dieser Elemente in einer Richtung bezüglich des anderen gestatten, so daß die genannte Relativbewegung sich in einer Erhöhung der Nutzlänge des Kabels äußert, dadurch gekennzeichnet, daß das Kabel in zwei Abschnitte (1a, 1b) geteilt ist, deren Ende jeweils an einem dieser Elemente (12, 13) befestigt ist, daß die von diesen beiden Elementen (12, 13) gebildete Einheit in das Innere eines Gehäuses (10) eingesteckt ist, das in einen Mantel (2) eingefügt ist, längs dessen das Kabel sich bewegt, und daß sie sich, entsprechend geführt, in der Lage befindet, längs dieses Gehäuses zu gleiten, und daß das Gehäuse (10) das innere Teil eines teleskopischen Systems (9, 10) bildet, das elastisch so beaufschlagt ist, daß es eine Grenzstellung maximaler Ausdehnung annimmt, und an dem die Enden der beiden Abschnitte (2a, 2b) befestigt sind, in die der Mantel (2) geteilt ist.

2. Vorrichtung nach Anspruch 1, dadurch gekennzeichnet, daß das eingesteckte Element (13) des Systems der beiden Elemente, die ineinandergesteckt sind und entgegen der von einem Satz von ergänzenden Vorsprüngen ausgeübten Rückhaltekraft in nur einer Richtung zueinander gleiten können, eine Auflagebasis (20) besitzt, die in einer zur Ebene des offenen Endes (21) des aufnehmenden Elements parallelen und dieser Ebene benachbarten Ebene gelegen ist, indem sie bezüglich dieser mindestens nach durchgeführter Einstellung hervorsteht, so klein die Relativbewegung auch sein mag, die zwischen diesen beiden Elementen in der Folge dieser Einstellung auftritt.

## Claims

1. Device for automatically adjusting the length of the cable in remote control mechanisms, particularly for automatic adjustment of the length of the control cable (1) of the butterfly valve (6) on the accelerator of automobiles, of the type comprising two members (12, 13) which engage one in the other and are interconnected via a system of complementary inclined teeth (13a, 14) which, under the effect of a force greater than a predetermined limit, permit displacement of one of said members in a direction relative to the other so that the indicated relative movement is translated into an increase in the usable length of the cable, characterised in that the cable is divided into two sections (1a, 1b) the ends of which are respectively attached to one of said members (12, 13), in that the assembly formed by said two members (12, 13) fits into the interior of a shell (10) inserted into a sheath (2) along which the cable moves, in that, appropriately guided, it is capable of sliding along said shell, and in that the shell (10) constitutes the internal component of a telescopic system (9, 10) which is resiliently urged to adopt an end position of maximum extension, and to which are attached the ends of the two sections (2a, 2b) into which the sheath (2) is divided.

2. Device according to claim 1, characterised in that the male member (13) of the system comprising the two members fitting one into the other and capable of sliding in one single direction relative to the other, contrary to the force exerted by a set of complementary projections, has a support surface (20) located in a plane parallel to the plane of the open end (21) of the female member and adjacent to said plane, projecting with respect to the latter at least once adjustment has been carried out, however reduced the relative displacement might be which occurs between these two members consequent upon this adjustment.
